# EUROPEAN PATENT APPLICATION

(11) **EP 2 857 250 A1**
(43) Date of publication of application: **08.04.2015**
(21) Application number: 13382383.1
(22) Date of filing: 01.10.2013
(51) Int. Cl.: B60K 35/00, B60R 16/023, B60W 40/09, B60W 50/14, G09B 9/052

(54) **Method for displaying information pertaining to efficient driving of a motor vehicle**

(71) Applicant: Seat, S.A., 08760 Martorell (ES)
(72) Inventor: Baños, Victor, 08860 Barcelona (ES); Arasa Gaspar, Anna, 08024 Barcelona (ES); Rodriguez Bosch, Rubén, 08230 Barcelona (ES); Molina Martínez, Daniel, 08028 Barcelona (ES)
(74) Representative: Isern-Jara, Nuria

(57) **Abstract**

A method and associated device for displaying information pertaining to efficient driving of a motor vehicle (5), wherein an image (2) is displayed on a graphical display (1) device by means of a control device (4), and wherein said image comprises at least one graphical element whose size is a function that is inversely proportional to the magnitude of a variation of the motor vehicle speed (5) for a predetermined control period. In this way, the driver can view the previous data related to the driving task, in respect of ecological and efficient driving, and if said driving is improving in efficiency or getting worse.

## Description

### OBJECT OF THE INVENTION

The patent application herein relates to a method for displaying information pertaining to efficient driving of a motor vehicle according to claim 1 that incorporates significant innovations and advantages.

In addition, this patent application also relates to a device for displaying information pertaining to efficient driving of a motor vehicle according to claim 12.

### BACKGROUND OF THE INVENTION

The screen of the motor vehicle in the centre console of a vehicle is usually used as a device for displaying information, such that the user can consult the data available for said motor vehicle.

The screen of the motor vehicle is usually located on the instrument panel of the motor vehicle or in the centre console, therefore being available to both the driver of the vehicle and the passenger, and can be viewed by both one or the other. Said method of displaying the vehicle information is usually used for adjusting driver assistance variables, and also for navigation systems, for multimedia and/or telematics. Additionally, and given the increasing importance of efficient, and therefore, ecological driving, motor vehicles incorporate the feature of giving instructions or advice to the drivers, thereby enabling them to drive more efficiently.

It is known from the state of the art, as described in various car manufacturer manuals, to display visually information related to consumption by means of bar graphs corresponding to specific periods of time.

On the other hand, document DE102008028561A1 of the prior art describes a display method and device, for example, an LCD, that shows sets of information simultaneously.

One of the sets of information indicates a target speed of the motor vehicle so as to drive in a manner that increases fuel economy. The other information indicates the change in fuel consumption due to the possible gear change. The display device temporarily overlaps the previous information and the most recent information.

On the other hand, document DE102011122182A1 of the prior art describes a device which has a detection unit together with a control unit for detecting a parameter that correlates directly or indirectly with the energy consumption of a motor vehicle. An evaluation unit is coupled to the detection unit and the control unit to evaluate the parameter related to driving in a fuel efficient driving style, wherein a switching device actuates an illumination device via the control unit based on the evaluation of the driving parameters. A method for displaying a fuel efficient driving style of a motor vehicle with an illuminated display screen is also described.

Therefore, there is still a need to present information related to the decrease in driving efficiency in a highly visual and intuitive manner.

### DESCRIPTION OF THE INVENTION

According to the invention herein, this object is achieved by a method and a device for displaying information pertaining to efficient driving of a motor vehicle according to independent claims 1 and 12. Additional advantages of the invention are presented in the dependent claims of the accompanying description below.

In the present invention, the information is displayed such that it is very easily comprehensible and, therefore, losing focus in respect of road conditions is minimised. Therefore, the information is displayed such that the driver can intuitively and quickly read the display and understand it, requiring minimum time to handle such information, even more so, taking into account the increase in the variables currently available to the user.

In particular, the driver can view the previous data related to the driving task, and gauge if said driving task is improving or getting worse based on efficiency criteria.

According to the invention, the method for displaying information pertaining to efficient driving of a motor vehicle is **characterised in that**:
- an image is displayed on a graphical display device by means of a control device,
- said image comprises at least one graphical element whose size is a function that is inversely proportional to the magnitude of a variation in motor vehicle speed for a predetermined control period.

Therefore, the size of the graphical element is based on the degree of acceleration said motor vehicle undergoes, whether positive or negative, either due to harshly accelerating or heavily braking. Specifically, the reduced size is related to reduced efficiency. The greater the acceleration (variation in speed), regardless if the latter is negative or positive, the smaller the size of the graphical element. In particular, the magnitude (absolute value) of the sum of the accelerations accumulated during the period is taken into account. The driver therefore receives a reliable impression of the level of driving efficiency for each control period via the graphical display device or screen. As a result, the size of the graphical element is largest when the motor vehicle speed remains substantially constant for the predetermined control period.

More specifically, the size of the graphical element is a length of a bar, which provides added clarity, the bar being a very visual graphical element in respect of reflecting magnitudes and degrees of progress as different bars can be easily compared.

Efficient driving is understood as a driving practice in which the fuel and/or electricity consumption of the motor vehicle are as low as possible, resulting in cost savings and a reduction in pollutant emissions.

According to another aspect of the invention, once a period of time at least equal to the control period has elapsed, a new graphical element is generated. In this way, the user can see how driving efficiency progresses over time, seeing the trend in successive control periods, comparing between different graphical elements.

Advantageously, each graphical element generated, by means of the control device, is situated on the image displayed on the graphical display device in proximity to the previously generated element, thereby forming a series. In this way, a clear visual comparison related to driving efficiency can be made for each control period in respect of the information immediately before and after. Additionally, in a preferred embodiment of the invention, the graphical display device displays an image of a motor vehicle en route towards the series of graphical elements in the form of bars, creating the visual effect of a motor vehicle travelling in the direction of a horizon in a city of skyscrapers, the height of which will vary depending on driving efficiency.

It is worth noting that the last graphical element generated is highlighted relative to the previous elements in the series. Therefore, the element corresponding to the control period most closely related in time can be quickly identified.

According to another aspect of the invention, the tonality of the background of the image on which the graphical elements are displayed changes depending on the accumulated variation of the vehicle speed in a specific number of control periods. In this way, there is a variable graph that shows driving efficiency cumulatively, and can be referred to at a glance, minimising the risk factor as the driver does not have to take their eyes off the road.

More specifically, the tonality of the background of the image on which the graphical elements are displayed will be clearer when the accumulated variation in vehicle speed for a specific number of control periods is lower, or will be darker when the accumulated variation in vehicle speed for a specific number of control periods is greater. Therefore, the tonality of the background of the image shows an average for driving efficiency of part of the journey. The background colour of the image is preferably blue, resembling the sky on the horizon. In this manner, the user can see a darker night sky or a more overcast sky due to pollution, when driving is less efficient and, by contrast, a brighter daytime sky without pollution when driving is more efficient. Alternatively, and in one particular embodiment, the background colour of the image will become a gradient colour, the colours near the bars being brighter and the colour being darker at the top. When the average driving efficiency increases, the (faded) border of the colour gradient increases in height, revealing a greater portion of a light coloured background. This causes the visual effect, the more efficient the driving, of transitioning to daytime, or a decreased level of contamination, and distancing thereof towards the buildings of the city the driver is travelling to. By contrast, the less efficient the driving, the visual effect is one of transitioning to night-time, or an increased level of contamination, and approaching thereof towards the buildings of the city the driver is travelling to.

According to another aspect of the invention, the graphical display device is a screen of the motor vehicle and/or the screen of an external electronic device. Said flexibility has the added advantage of the vehicle not necessarily requiring a screen, but an external electronic device can be used, which are in widespread use nowadays, which, in some cases, have sensors that can measure accelerations, which can be used as an alternative to those in the motor vehicle itself.

According to yet another aspect of the invention, the image displayed on the graphical display device comprises at least one additional graphical element that instantly shows the magnitude of the variation of the vehicle speed. Hence, the driver therefore receives a reliable impression of how far the driving is shifting at all times, in respect of what would be optimal and ecologically efficient driving.

According to yet another aspect of the invention, the control device stores the accumulated variation in speed and compares it to a predetermined level. Therefore, the driver is informed about whether the driving task is within the desired efficiency margins, and may be rated more or less positively based on how it adjusts to each of the predetermined levels, making it easier for the user to quickly comprehend the information.

The invention herein further relates to a device for displaying information pertaining to efficient driving of a motor vehicle which comprises at least one control device, and at least one graphical display device wherein an image is displayed, configured such that said image comprises at least one graphical element whose size is a function that is inversely proportional to the magnitude of the motor vehicle speed for a predetermined control period. Therefore, the size of the graphical element is based on the degree of acceleration said motor vehicle undergoes, whether positive or negative, either due to harshly accelerating or heavily braking. Specifically, the reduced size is related to reduced efficiency. The greater the acceleration (variation in speed), regardless if the latter is negative or positive, the smaller the size of the graphical element. In particular, the magnitude (absolute value) of the sum of the accelerations accumulated during the period is taken into account. The driver therefore receives a reliable impression of the level of driving efficiency for each control period via the graphical display device or screen. As a result, the size of the graphical element is largest when the motor vehicle speed remains substantially constant for the predetermined control period.

According to another aspect of the invention, once a period of time at least equal to the control period has elapsed, the control device is configured to generate a new graphical element. In this way, the user can see how driving efficiency progresses over time, viewing the trend in successive control periods.

According to yet another aspect of the invention, the device comprises means for detecting the speed variation inside the motor vehicle or inside an external electronic device, wherein said means for detecting the variation of the speed of the external electronic device can be used as an alternative to those of the motor vehicle itself. The means for detecting the speed variation will specifically be sensors that can measure accelerations.

According to another aspect of the invention, the means for detecting the speed variation is a positioning system of the motor vehicle or the external electronic device, wherein said means can be used as an alternative to sensors that can measure acceleration in the motor vehicle itself.

The accompanying drawings show, by way of non-limiting example, a method and an associated device for displaying information pertaining to efficient driving of a motor vehicle, formed according to the invention. Other characteristics and advantages of the aforementioned method and associated device, for displaying information pertaining to efficient driving of a motor vehicle, object of the invention herein, will become apparent from the description of a preferred, although not exclusive embodiment, which is illustrated by way of non-limiting example in the drawings appended, in which:

### BRIEF DESCRIPTION OF THE DRAWINGS

Figure 1.- General front, perspective view of the motor vehicle interface with the user at the dashboard, according to the invention herein;
Figure 2.- Schematic representation of the components and systems involved in the development of the invention herein;
Figure 3.- View of a method for displaying the image of the number of bars and a background indicating driving efficiency, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

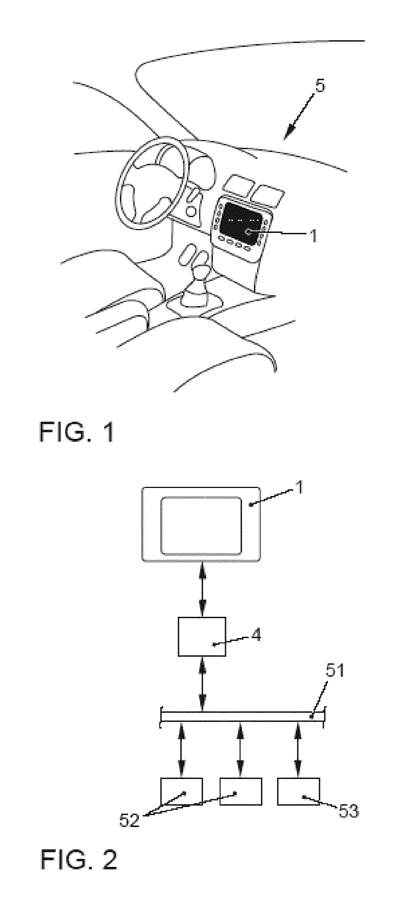

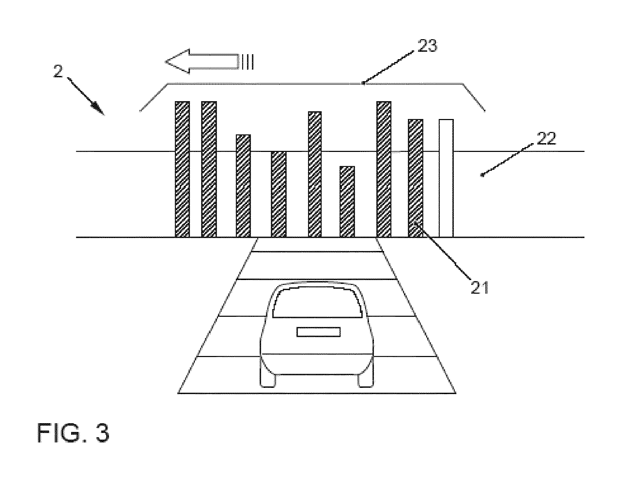

Therefore, as seen in Figures 2 and 3 the method for displaying information pertaining to efficient driving of a motor vehicle 5, wherein an image is displayed 2 on a graphical display device 1 by means of a control device 4, said image 2 comprising at least one graphical element 21 whose size is a function that is inversely proportional to the magnitude of a variation in the motor vehicle speed 5 for a predetermined control period.

More specifically, and as seen in Figure 3, the size of the graphical element is largest when the motor vehicle 5 speed remains substantially constant for the predetermined control period.

On the other hand, and preferably, the size of the graphical element 21, as seen in Figure 3, is a length of a bar, which will be vertically oriented in a preferred embodiment, or can be horizontal or tilted at different degrees, in alternative embodiments.

According to another aspect of the invention, and as seen in Figure 3, once a period of time at least equal to the control period has elapsed, a new graphical element 21 is generated, said graphical element 21 generated by means of the control device 4 is situated on the image displayed on the graphical display device 1 in proximity to the previously generated element, thereby forming a series 23. Said series 23 will contain a number of elements such that the clarity of the display is not diminished, being preferably between 5 and 15. The last graphical element 21 generated is highlighted relative to the previous elements in the series 23, preferably in a conspicuous colour.

According to another aspect of the invention, and as seen in Figure 3, the tonality of the background 22 of the image 2 on which the graphical elements 21 are displayed changes depending on the accumulated variation of the vehicle speed 5 in a specific number of control periods, the tonality of the background 22 of the image 2 on which the graphical elements are displayed 21 being clearer when the accumulated variation in vehicle speed 5 for a specific number of control periods is lower, or being darker when the accumulated variation in vehicle speed 5 for a specific number of control periods is greater. The background colour 22 of the image 2 is preferably blue, resembling the sky on the horizon. The user can therefore see a darker night sky or a more overcast sky due to pollution, when driving is less efficient and, by contrast, a brighter daytime sky without pollution when driving is more efficient. Alternatively, and in one particular embodiment, the background colour 22 of the image 2 will become a gradient colour, the colours near the bars being brighter and the colour being darker at the top. When the average driving efficiency increases, the (faded) border of the colour gradient increases in height, revealing a greater portion of a light coloured background.

According to another aspect of the invention and as seen in Figure 1, the graphical display device 1 is a screen of the motor vehicle 5 or a screen of an external electronic device.

According to another aspect of the invention, the image displayed on the graphical display device 1 comprises at least one additional graphical element that instantly shows the magnitude of the variation of the vehicle speed.

According to another aspect of the invention, the control device 4 stores the accumulated variation in speed and compares it to a predetermined level.

In respect of the device for displaying information pertaining to efficient driving of a motor vehicle 5, as seen in Figures 2 and 3, the latter comprises at least one control device 4, and at least one graphical display device 1 wherein an image is displayed 2, configured such that said image 2 comprises at least one graphical element 21, whose size is a function that is inversely proportional to the magnitude of a motor vehicle speed 5 for a predetermined control period.

According to another aspect of the invention, and as seen in Figure 3, once a period of time at least equal to the control period has elapsed, the control device 4 is configured to generate a new graphical element 21.

According to yet another aspect of the invention, and as seen in Figure 2, the device for displaying information pertaining to efficient driving of a motor vehicle 5 comprises means for detecting the speed variation 53 inside the motor vehicle 5 or inside an external electronic device. Therefore, and according to one embodiment, accelerations and/or inertia are detected by the internal accelerometers of the motor vehicle 5 (for example those used for sensorising the deployment of the airbag) or by the accelerometers of the external electronic device (for example, a smartphone). In the case of the external electronic device, and in one particular embodiment, the accelerometers adapt the screen in a vertical or horizontal direction when the smartphone is pointed in either direction.

According to yet another aspect of the invention, and as seen in Figure 2, the device for displaying information pertaining to efficient driving of a motor vehicle 5 comprises means for detecting the speed variation 53 that is a positioning system of the vehicle 5 or the external electronic device. Acceleration can be calculated from the speed, which is taken in this particular embodiment from the vehicle's instruments 5 or from the GPS readings (global positioning system) of the mobile device (external GPS or smartphone with GPS).

The details, shapes and dimensions and other accessory elements as well as the components used in the implementation of the aforementioned method, and associated device for displaying information pertaining to efficient driving of a motor vehicle may be conveniently replaced by others which are technically equivalent and do not depart from the essential nature of the invention or from the scope defined by the claims contained in the list hereinafter.

### List of numerical references:

(1) Graphical display device (motor vehicle interface screen)
(2) Image
(21) Graphical element
(22) Background
(23) Series of graphical elements
(4) Control device (onboard computer)
(5) Motor vehicle
(51) Internal communication channel of the motor vehicle
(52) Other systems in the motor vehicle
(53) Speed variation detection means

## Claims

1. A method for displaying information pertaining to efficient driving of a car (5), wherein an image is displayed (2) on a graphical display device (1) by means of a control device (4), **characterised in that** said image (2) comprises at least one graphical element (21) whose size is a function that is inversely proportional to the magnitude of the variation in motor vehicle speed (5) for a predetermined control period.

2. A method according to claim 1, **characterised in that** the size of the graphical element is largest when the motor vehicle (5) speed remains substantially constant for the predetermined control period.

3. A method according to claim 1, **characterised in that** the size of the graphical element (21) is a length of a bar.

4. A method according to claim 1, **characterised in that** once a period of time at least equal to the control period has elapsed, a new graphical element (21) is generated.

5. A method according to claim 4, **characterised in that** each graphical element (21) generated by means of the control device (4) is situated on the image displayed on the graphical display device (1) in proximity to the previously generated element, thereby forming a series (23).

6. A method according to claim 5, **characterised in that** the last graphical element (21) generated is highlighted relative to the previous elements in the series (23).

7. A method according to claim 1, **characterised in that** the tonality of the background (22) of the image (2) on which the graphical elements are displayed (21) changes depending on the accumulated variation of the vehicle speed (5) in a specific number of control periods.

8. A method according to claim 7, **characterised in that** the tonality of the background (22) of the image (2) on which the graphical elements are displayed (21) will be clearer when the accumulated variation in vehicle speed (5) for a specific number of control periods is lower, or will be darker when the accumulated variation in vehicle speed (5) for a specific number of control periods is greater.

9. A method according to claim 1, **characterised in that** the graphical display device (1) is a screen of the motor vehicle (5) and/or the screen of an external electronic device.

10. A method according to claim 1, **characterised in that** the image displayed on the graphical display device (1) comprises at least one additional graphical element that instantly shows the magnitude of the variation of the vehicle speed.

11. A method according to claim 1, **characterised in that** the control device (4) stores the accumulated variation in speed and compares it to a predetermined level.

12. A device for displaying information pertaining to efficient driving of a car (5) that comprises at least one control device (4), and at least one graphical display device (1) wherein an image is displayed (2), configured such that said image (2) comprises at least one graphical element (21) whose size is a function that is inversely proportional to the magnitude of the motor vehicle speed (5) for a predetermined control period.

13. A device according to claim 12, **characterised in that** once a period of time at least equal to the control period has elapsed, the control device 4 is configured to generate a new graphical element 21.

14. A device according to claim 12, **characterised in that** it comprises means for detecting the speed variation (53) inside the motor vehicle (5) or inside an external electronic device.

15. A device according to claim 14, **characterised in that** the means for detecting the speed variation (53) is a positioning system of the vehicle (5) or the external electronic device.
